(19) Europäisches Patentamt
European Patent Office
Office européen des brevets

(11) **EP 3 483 759 B1**

(12) **FASCICULE DE BREVET EUROPEEN**

(45) Date de publication et mention
de la délivrance du brevet:
**27.01.2021 Bulletin 2021/04**

(51) Int Cl.:
*G06F 21/30* *(2013.01)*    *H04L 9/32* *(2006.01)*
*H04L 29/06* *(2006.01)*    *H04W 12/06* *(2021.01)*

(21) Numéro de dépôt: **18306489.8**

(22) Date de dépôt: **14.11.2018**

(54) **PROCÉDÉ DE TRAITEMENT D'IMAGE MIS EN OEUVRE PAR UN TERMINAL FORMANT UN ENVIRONNEMENT BOÎTE BLANCHE**

BILD VERARBEITUNGSMETHODE, DIE DURCH EINEN TERMINAL BILDUNG EINER WEISSKASTEN-UMGEBUNG DURCHGEFÜHRT WERDEN

IMAGE PROCESSING METHOD IMPLEMENTED BY A TERMINAL FORMING A WHITE BOX ENVIRONMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2017 FR 1760676**

(43) Date de publication de la demande:
**15.05.2019 Bulletin 2019/20**

(73) Titulaire: **Idemia Identity & Security France
92400 Courbevoie (FR)**

(72) Inventeurs:
• **CHABANNE, Hervé
92400 COURBEVOIE (FR)**
• **BRINGER, Julien
92400 COURBEVOIE (FR)**

(74) Mandataire: **Regimbeau
20, rue de Chazelles
75847 Paris Cedex 17 (FR)**

(56) Documents cités:
**US-A1- 2003 007 670    US-A1- 2004 164 848
US-A1- 2005 138 392    US-A1- 2006 239 503**

## Description

## DOMAINE DE L'INVENTION

La présente invention concerne un procédé de traitement d'image mis en œuvre dans un terminal utilisateur.

L'invention est avantageusement appliquée au traitement d'images acquises par des capteurs biométriques, par exemple à des fins d'authentification biométrique.

## ETAT DE LA TECHNIQUE

Certains traitements mis en œuvre dans des terminaux ont vocation à faire l'objet de mesures de protection.

Certaines mesures de protection ont pour objectif de préserver la confidentialité de certaines données secrètes stockées dans un terminal, par exemple un mot de passe conditionnant par exemple l'accès à un service rendu par le traitement. L'objectif d'un attaquant sera dans ce cas de tenter de deviner la valeur de la donnée secrète de sorte à pouvoir bénéficier du service en question. La valeur ajoutée d'un traitement muni de telles mesures de protection réside donc dans sa capacité à résister à de telles attaques.

D'autres mesures de protection ont pour objectif de préserver la confidentialité de fonctions de code de programme mis en œuvre dans un terminal. La valeur ajoutée de tels traitements peut en effet résider dans l'utilisation de valeurs optimales de paramètres au cours de ces traitements, ces valeurs optimales étant le fruit d'un long processus de sélection, et représentant donc un savoir-faire à protéger.

Un tel enjeu se rencontre en particulier dans des codes de programme produisant une donnée de sortie à partir d'une image préalablement acquise par un capteur. Dans de tels codes, la qualité de la donnée de sortie dépend directement des valeurs de paramètres utilisés par des fonctions du code exécuté.

Par exemple, la donnée de sortie peut être une donnée biométrique acquise par un capteur biométrique, cette donnée de sortie ayant vocation à être comparée avec une autre donnée dans le cadre d'une authentification biométrique. Dans une telle application, la qualité de la donnée biométrique s'illustre notamment par sa capacité à caractériser un utilisateur unique, de sorte à générer le moins possible de détections manquées à l'issue d'une telle authentification biométrique.

Lorsqu'un attaquant ne peut pas obtenir d'accès direct à la mémoire d'un terminal dont il souhaite percer les secrets, l'attaquant peut mettre en œuvre des attaques dites par canaux cachés (« side channel attack » en anglais), consistant à observer le comportement extérieur du terminal dans divers contextes. Il est par exemple décrit dans le document WO2015097413A1 un procédé dans lequel des opérations sont effectuées en parallèle d'un traitement de sorte à brouiller les signaux observés au cours d'une attaque par canaux cachés.

Il existe cependant des terminaux peu sécurisés au point de constituer ce qu'on appelle une « boîte blanche ». Un attaquant peut obtenir un accès non seulement aux données d'entrée et de sortie d'un programme mis en œuvre par une boîte blanche, mais a également accès aux données intermédiaires de ce programme. Le brouillage proposé par exemple dans le document WO2015097413A1 devient alors totalement inopérant.

En effectuant des corrélations entre ces données et par ingénierie inverse, un attaquant peut en déduire la fonction générale remplie par le terminal et en déduire les valeurs optimales de paramètres qui permettent de conduire à une donnée de sortie de bonne qualité. Le document US2004164848 décrit l'ajustement d'un paramètre à une première valeur lorsque la donnée d'épreuve est égale à une donnée secrète de référence, et l'ajustement de ce paramètre à une deuxième valeur lorsque la donnée d'épreuve est différente de la donnée secrète de référence. Cependant, il ne divulgue pas l'utilisation d'une fonction pseudo-aléatoire pour l'ajustement du paramètre.

## EXPOSE DE L'INVENTION

Un but de l'invention est d'empêcher un attaquant d'obtenir une donnée de sortie d'un traitement d'image qui soit de bonne qualité lorsque le traitement d'image est mis en œuvre par un terminal constituant une boîte blanche.

Un autre but de l'invention est d'empêcher un attaquant de déduire, par ingénierie inverse, de valeurs optimales de paramètres utilisées par ce traitement d'image pour produire une donnée de sortie de bonne qualité.

Il est dès lors proposé, selon un premier aspect de l'invention, un procédé de traitement d'image mis en œuvre par un terminal, comprenant des étapes de réception d'une donnée d'épreuve préalablement saisie par un utilisateur du terminal, d'ajustement d'au moins un paramètre à une première valeur lorsque la donnée d'épreuve est égale à une donnée secrète de référence, et à une deuxième valeur différente de la première valeur lorsque la donnée d'épreuve est différente de la donnée secrète de référence, et de génération d'une donnée de sortie à partir d'une donnée d'entrée étant ou dépendant d'une image préalablement acquise par un capteur, et en outre à partir du paramètre, la donnée de sortie ayant une valeur fonction de la valeur du paramètre ajusté.

Dans le procédé selon le premier aspect de l'invention, une donnée de sortie est générée aussi bien dans le cas où la donnée d'épreuve est différente de la donnée secrète de référence que dans le cas où ces données sont identiques. De la sorte, un attaquant ayant accès à la mémoire ne peut pas facilement déterminer si la donnée d'épreuve qu'il a saisie est correcte ou non en observant si le traitement d'image a été mis en œuvre jusqu'au bout ou non (c'est-à-dire a produit une donnée de sortie ou non). Le procédé selon le premier aspect de l'invention offre donc un niveau de sécurité plus élevé dans des environnements « boîte blanche » que des procédés ne produisant pas de donnée de sortie lorsqu'une donnée d'épreuve saisie est incorrecte.

Par ailleurs, selon le procédé proposé, la donnée d'épreuve saisie influe sur la valeur de la donnée de sortie. Par conséquent, un attaquant ne connaissant pas la donnée secrète de référence, obtiendra, en saisissant différentes valeurs de donnée d'épreuve, des données de sortie de qualité hétérogène. Il pourra notamment obtenir une donnée de sortie dégradée voire très dégradée.

L'ajustement comprend l'application d'une fonction pseudo-aléatoire à la donnée d'épreuve de sorte à produire une donnée intermédiaire, dans lequel le paramètre dépend de la donnée intermédiaire. L'utilisation d'une telle fonction pseudo-aléatoire pour ajuster la valeur du paramètre est avantageuse car cette valeur ajustée est relativement imprévisible.

Dans l'application susvisée dans laquelle la donnée de sortie est une donnée biométrique acquise par un capteur biométrique, il est en particulier difficile pour un attaquant d'évaluer la qualité de la donnée de sortie qu'il obtient. Il est donc très difficile, dans cette application particulière, pour un attaquant de déterminer une valeur du paramètre conduisant à une donnée de sortie de valeur optimale.

De préférence, les valeurs du paramètre sont adaptées pour que la donnée de sortie soit dégradée lorsque le paramètre est ajusté à la deuxième valeur par rapport à lorsque le paramètre est ajusté à la première valeur. Dans ce cas, l'attaquant ignorant la donnée secrète de référence ne peut utiliser le traitement d'image que dans un mode dégradé. Dans l'application biométrique susvisée, la donnée de sortie dégradée sera davantage susceptible d'engendrer un résultat d'authentification négatif car pourra être considérée comme trop différente de la donnée avec laquelle sera comparée dans cette authentification.

De préférence, la deuxième valeur du paramètre peut être propre à la donnée d'épreuve reçue. Ceci permet de rendre le comportement du traitement fortement hétérogène en fonction de la valeur de la donnée d'épreuve saisie, ce qui a pour effet de rendre encore plus difficile le travail d'analyse du traitement effectué par l'attaquant.

De préférence, la fonction pseudo-aléatoire est une permutation circulaire. Dans ce cas la fonction peut être de la forme :

$$f(\pi) = m^{\pi} \bmod 2^{l}$$

dans lequel : $\pi$ est la donnée d'épreuve, $l$ est un entier prédéterminé tel que $2^{l-1}$ est premier, et $m$ est un générateur prédéterminé du groupe cyclique à $2^{l-1}$ éléments.

L'utilisation d'une fonction de permutation circulaire de cette forme est avantageuse car est particulièrement résistante à des attaques consistant à comparer les données de sorties obtenues par la mise en œuvre du même traitement sur deux terminaux différents ayant des données secrètes de références de valeur différentes, de façon à déduire par recoupement la formule mathématique de la fonction.

De préférence, l'ajustement comprend en outre une troncature de la donnée intermédiaire. La troncature réalisée laisse la possibilité d'obtenir permet d'avoir toutes les valeurs possibles d'un intervalle donné pour le paramètre considéré.

De préférence, plusieurs paramètres sont simultanément ajustés au cours de l'étape d'ajustement par différentes troncatures de la donnée intermédiaire, et dans lequel la donnée de sortie a une valeur fonction de la valeur de chaque paramètre ajusté. Ces troncatures multiples ont deux avantages. Premièrement, le fait d'ajuster plusieurs paramètres dont dépend la donnée de sortie est de nature à complexifier encore plus le travail d'analyse que doit faire l'attaquant pour comprendre le traitement d'image effectué. Deuxièmement, les troncatures sont mises en œuvre sur la base de la même donnée intermédiaire, si bien qu'une seule application de la fonction de hachage est nécessaire pour obtenir des valeurs pour les différents paramètres.

Le capteur peut par ailleurs être un capteur biométrique.

Il est également proposé selon un deuxième aspect de l'invention un produit programme d'ordinateur comprenant des instructions de code de programme pour l'exécution des étapes du procédé selon le premier aspect de l'invention, lorsque ce programme est exécuté par au moins un processeur.

Il est également proposé selon un troisième aspect de l'invention un terminal comprenant un capteur pour acquérir une image, une interface de saisie pour recevoir une donnée d'épreuve saisie par un utilisateur, et un module de traitement d'image configuré pour : ajuster au moins un paramètre à une première valeur lorsque la donnée d'épreuve est égale à une donnée secrète de référence, et à une deuxième valeur différente de la première valeur lorsque la donnée d'épreuve est différente de la donnée secrète de référence, et générer au moins une donnée de sortie à partir de l'image acquise et à partir du paramètre, la donnée de sortie ayant une valeur fonction de la valeur du paramètre ajusté.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement un système d'authentification biométrique selon un mode de réalisation de l'invention.

- La figure 2 est un organigramme d'étapes d'un procédé d'authentification biométrique selon un mode de réalisation de l'invention.

Sur l'ensemble des figures, les éléments similaires portent des références identiques.

## DESCRIPTION DETAILLEE DE L'INVENTION

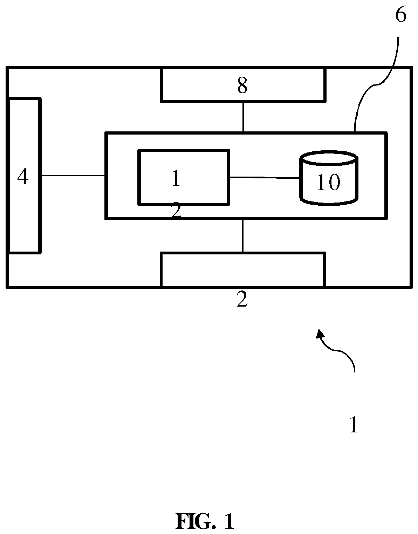

En référence à la **figure 1,** un terminal 1 comprend une interface de saisie 2 de données par un utilisateur du terminal 1, un capteur d'image 4, un module de traitement d'image 6 et un écran d'affichage 8.

L'interface de saisie 2 comprend typiquement au moins un des éléments suivants : un clavier, un élément sensible au toucher, une souris.

Le capteur d'image 4 est par exemple un capteur biométrique. On se focalisera dans ce qui suit sur un mode de réalisation dans lequel le capteur biométrique 4 est configuré pour acquérir des données représentatives d'une empreinte digitale d'un utilisateur du terminal 1.

Le module de traitement d'image 6 est configuré pour appliquer une chaîne de traitement d'image aux données acquises par le capteur 4 d'image de sorte à produire des données de sortie.

Le module de traitement d'image 6 comprend typiquement une mémoire 10 et au moins un processeur 12 configuré pour exécuter un programme d'ordinateur mémorisé dans la mémoire 10.

Le programme comprend par ailleurs des premières instructions de code pour mettre en œuvre le traitement d'image lui-même, ces premières instructions de code prenant en entrée une donnée fournie par le capteur 4 et par ailleurs n paramètres $p_1,...,p_n$ (n étant supérieur ou égal à 1). Ces premières instructions de code produisent, lorsqu'elles sont exécutées par le processeur 12, une donnée de sortie dépendant de ces données d'entrée (donnée fournie par le capteur 4 et les paramètres $p_1, ...,p_n$).

On suppose qu'une combinaison de valeurs optimales $o_1,...,o_n$ pour les n paramètres $p_1,...,p_n$ a été préalablement déterminée. On entend ici par valeurs optimales des valeurs qui permettent de conduire à l'obtention d'une donnée de sortie de qualité maximale selon une métrique prédéterminée, lorsque les premières instructions de codes sont exécutées par le processeur 12 du module de traitement d'image 6.

Ces valeurs optimales $o_1,...,o_n$ de paramètres ne sont pas directement mémorisées dans le terminal 1.

Le programme comprend par ailleurs des deuxièmes instructions ayant pour objet d'ajuster les valeurs respectives des n paramètres utilisées par les premières instructions de code. Ces deuxièmes instructions de code font notamment appel à une fonction f de formule générale prédéterminée prenant en entrée une donnée d'épreuve.

L'image de la donnée d'épreuve par cette fonction f est une donnée hachée h :

$$h = f(\pi)$$

Des valeurs pour les paramètres $p_1,...,p_n$ peuvent être déduites de la donnée intermédiaire h par des troncatures qui seront détaillées plus loin.

La fonction de hachage cryptographique f est configurée pour qu'il puisse être déduit de la donnée intermédiaire h :

- la combinaison de n valeurs optimales $o_1,...,o_n$ pour les paramètres $p_1,...,p_n$, lorsqu'on fournit en entrée de la fonction f une donnée d'épreuve $\pi$ égale à une donnée secrète de référence *PIN* propre à un utilisateur du terminal 1.
- d'autres combinaisons de n valeurs pour les paramètres $p_1,..., p_n$ lorsqu'on fournit en entrée de la fonction f une donnée d'épreuve ayant d'autres valeurs.

De préférence, la fonction f est une permutation circulaire.

De préférence, il est fait en sorte que l'espace d'arrivée de la fonction soit suffisamment grand pour que chaque combinaison de n valeurs produite par la fonction soit propre à la valeur de la donnée d'épreuve en entrée.

Dans un premier mode de réalisation, f est une fonction affine de la forme suivante :

$$f(\pi) = l\pi + m$$

où *l* et *m* sont des constantes prédéterminées mémorisées dans le terminal 1.

Il est cependant à noter qu'en utilisant une telle fonction affine un attaquant pourrait deviner les valeurs optimales $o_i$ des paramètres $p_i$ en établissant des corrélations entre deux terminaux mettant en œuvre le même traitement mais appartenant à des possesseurs différents. Une attaque permettant d'atteindre cet objectif est en effet la suivante.

Partons de l'hypothèse les valeurs optimales $o_i$ des paramètres $p_i$ sont des valeurs communes pour deux terminaux, et que les données secrètes *PIN* respectives de deux terminaux sont différentes. En conséquence, les deux fonctions f mises en œuvre dans les deux terminaux peuvent être représentées par deux droites constituées de points dont les coordonnées sont $(\pi, f(\pi))$. Ces deux droites on pour point d'intersection le point $(PIN, f(PIN))$ conduisant aux valeurs optimales $o_i$. En faisant plusieurs essais de saisie de la donnée d'épreuve $\pi$ sur les deux terminaux, l'attaquant peut reconstruire ces deux droites, déterminer leur point d'intersection et ainsi être guidé vers le jeu de valeurs optimales $o_i$ des paramètres $p_i$.

Dans un deuxième mode de réalisation, la fonction pseudo-aléatoire est de la forme suivante :

$$f(\pi) = m^{\pi} \bmod 2^l$$

dans lequel :

- $l$ est un entier prédéterminé tel que $2^{l-1}$ est premier,
- $m$ est un générateur prédéterminé du groupe cyclique à $2^{l-1}$ éléments.

C'est l'ajustement de ces constantes $l$ et $m$ qui permet de faire en sorte que la fonction $f$ respecte la règle mentionnée ci-dessus, selon laquelle on obtient, pour tout i allant de 1 à n, $p_i = o_i$ si et seulement si $\pi$ = PIN).

- *mod* est l'opérateur modulo.

La fonction f selon ce deuxième mode de réalisation est particulièrement avantageuse par rapport à une fonction affine car est résistante à l'attaque précitée se fondant sur l'établissement de corrélations entre plusieurs terminaux.

Le terminal 1 est par exemple un téléphone, un smartphone, un ordinateur de bureau, un ordinateur portable, une tablette, etc.

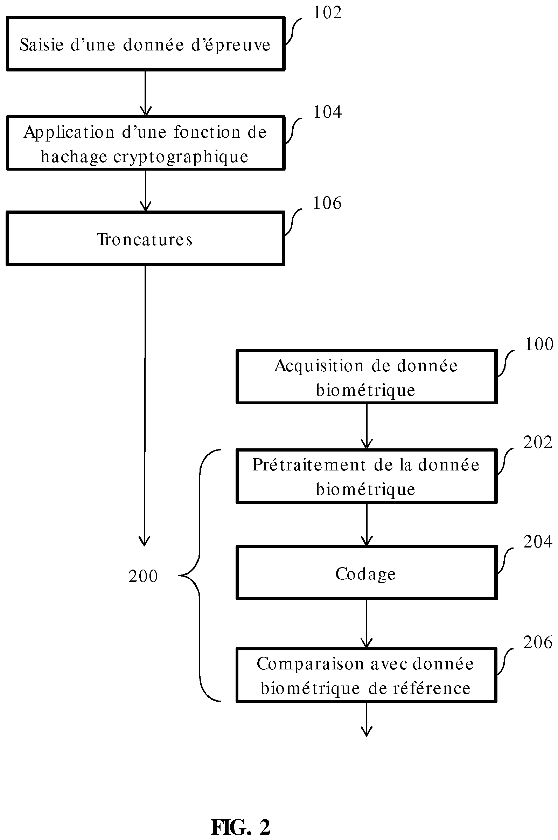

En référence à l'organigramme de la **figure 2,** un procédé mis en œuvre par le terminal 1 comprend les étapes suivantes.

Le capteur biométrique 4 acquiert une donnée biométrique, par exemple représentative de l'empreinte digitale d'un utilisateur du terminal 1 (étape 100).

Le processeur 12 déclenche par ailleurs l'affichage sur l'écran d'affichage 8 du terminal 1 d'un message invitant l'utilisateur du terminal 1 à saisir une donnée d'épreuve $\pi$.

L'interface de saisie 2 acquiert une donnée d'épreuve $\pi$ saisie par l'utilisateur du terminal 1 (étape 102) en réaction à ce message d'invitation affiché sur l'écran d'affichage 8.

L'affichage du message et/ou l'acquisition 102 de la donnée d'épreuve peut être mise en œuvre avant ou après l'acquisition de la donnée biométrique par le capteur biométrique 4.

Le processeur 12 génère une combinaison de n valeurs pour les n paramètres $p_i$. Cette génération comprend les sous-étapes suivantes.

Le processeur 12 applique la fonction pseudo-aléatoire $f$ à la donnée d'épreuve $\pi$ en utilisant les constantes $l$ et $m$ préalablement mémorisées dans la mémoire 10 du terminal 1 (étape 104), de sorte à produire la donnée intermédiaire $h$.

La donnée intermédiaire $h$ a une représentation binaire ayant un certain nombre de bits.

La donnée intermédiaire fait l'objet de troncatures de sorte à produire les n valeurs des paramètres $p_i$ (étape 106). On a par exemple :

$$h = a|p_1| \ldots |p_i| \ldots |p_n$$

où | est représentatif des troncatures mise en œuvre. Ici, des bits de poids les plus faibles de la donnée intermédiaire h sont utilisés pour former la valeur du paramètre $p_n$, et au moins un bit $a$ de poids le plus fort de la donnée intermédiaire h est laissé inutilisé.

Ensuite, le module de traitement d'image 6 met en œuvre un traitement d'image 200 en exécutant les premières instructions de code, de sorte à générer une donnée de sortie à partir de la donnée biométrique acquise par le capteur biométrique 4 et à partir des valeurs de paramètres $p_i$ qui ont été générées sur la base de la donnée d'épreuve saisie par l'utilisateur du terminal 1.

Le traitement d'image 200 comprend typiquement une étape de prétraitement de la donnée biométrique acquise, puis une étape de codage.

L'étape de prétraitement peut comprendre au moins un des traitements suivants : ajustement de contraste, ajustement de luminosité, application d'un gain, rééchantillonnage (ajustement d'un taux de rafraîchissement).

Le traitement d'image 200 peut également comprendre une étape de détection de contenu vivant (« liveness détection » en anglais). Cette étape de détection, connue en elle-même, vise à s'assurer que l'image acquise provient effectivement d'une personne. Par exemple, l'étape de détection mise en œuvre est celle décrite dans le document « Secure Face Unlock: Spoof Détection on Smartphones », 2016, par Keyurkumar Patel et Anil K. Jain.

Le traitement 200 utilise, au cours de l'au moins une de ses sous-étapes 202, 204 les valeurs générées pour les paramètres $p_i$.

Dans un premier cas, la donnée d'épreuve saisie par l'utilisateur est égale à la donnée secrète de référence ($\pi$ = PIN). Grâce à la façon particulière dont la fonction f a préalablement été construite, le processeur 12 génère dans ce cas les valeurs optimales $o_i$ pour les paramètres $p_i$. En conséquence, la donnée de sortie produite à l'issue du traitement 200 est de bonne qualité.

Dans un deuxième cas, la donnée d'épreuve saisie par l'utilisateur est différente de la donnée secrète de référence ($\pi \neq$ PIN). Ce deuxième cas peut survenir notamment lorsqu'un utilisateur non agréé s'est emparé du terminal 1 et qu'il cherche à se faire passer pour l'utilisateur légitime du terminal 1. Le processeur 12 génère des valeurs pour les paramètres $p_i$ qui sont dégradées par rapport aux valeurs $o_i$. En conséquence, la donnée de sortie produite à l'issue du traitement 200 est de qualité dégradée.

La donnée de sortie peut être exploitée de façons diverses.

Dans un premier mode de réalisation, la donnée de sortie est utilisée au cours d'un procédé d'authentification biométrique ultérieur conditionnant l'accès par l'utilisateur du terminal 1 à un certain service. La donnée de sortie est alors elle-même une donnée d'épreuve biométrique qui est ensuite comparée (étape 206) avec une donnée biométrique secrète de référence enregistrée au cours d'une phase d'enrôlement préalable de l'utilisateur légitime du terminal 1. La comparaison 206 des deux données biométriques est connue de l'état de la technique. Si les deux données biométriques comparées sont égales (ou suffisamment proches), alors un résultat d'authentification positif est produit à l'issue de l'étape 206. L'utilisateur du terminal 1 obtient alors un accès au service. Si les deux données biométriques comparées sont différentes (ou trop éloignées), alors un résultat d'authentification négatif est produit à l'issue de l'étape 206. Un accès au service n'est alors pas autorisé par le terminal 1.

Dans un deuxième mode de réalisation, la comparaison 206 entre les deux données biométriques précitée fait partie du traitement 200 lui-même mis en œuvre par le terminal 1, et la donnée de sortie de ce traitement est en fait le résultat de l'authentification biométrique. Dans ce mode de réalisation, la qualité de la donnée de sortie peut être mesurée par exemple en termes de probabilité de détection manquée (c'est-à-dire une probabilité que l'utilisateur légitime du terminal 1 obtiendra un résultat positif d'authentification). Cette probabilité doit être la plus petite possible. En dégradant volontairement les paramètres $p_i$ utilisé au cours du traitement lors de la saisie d'une donnée d'épreuve incorrecte (c'est-à-dire différente de la donnée secrète de référence), cette probabilité peut être augmentée à une valeur proche de 100 % de sorte qu'un utilisateur non agréé ne puisse pas être obtenir un résultat d'authentification positif.

## Revendications

1. Procédé de traitement d'image mis en œuvre par un terminal (1), comprenant des étapes de

   • réception d'une donnée d'épreuve préalablement saisie par un utilisateur du terminal (1),
   • ajustement (104, 106) d'au moins un paramètre à une première valeur lorsque la donnée d'épreuve est égale à une donnée secrète de référence, et à une deuxième valeur différente de la première valeur lorsque la donnée d'épreuve est différente de la donnée secrète de référence, dans lequel l'ajustement comprend l'application (104) d'une fonction pseudo-aléatoire à la donnée d'épreuve de sorte à produire une donnée intermédiaire, dans lequel le paramètre dépend de la donnée intermédiaire,
   • génération (200) d'une donnée de sortie à partir : d'une donnée d'entrée étant ou dépendant d'une image préalablement acquise par un capteur (4), et en outre à partir du paramètre, la donnée de sortie ayant une valeur fonction de la valeur du paramètre ajusté.

2. Procédé selon la revendication précédente, dans lequel les valeurs du paramètre sont adaptées pour que la donnée de sortie soit dégradée lorsque le paramètre est ajusté à la deuxième valeur par rapport à lorsque le paramètre est ajusté à la première valeur.

3. Procédé selon l'une des revendications précédentes, dans lequel la deuxième valeur du paramètre est propre à la donnée d'épreuve reçue.

4. Procédé selon l'une des revendications précédentes, dans lequel la donnée de sortie est une donnée d'épreuve biométrique destinée à être comparée avec une donnée biométrique secrète de référence.

5. Procédé selon l'une des revendications précédentes, dans lequel la fonction pseudo-aléatoire est une permutation circulaire.

6. Procédé selon l'une des revendications précédentes, dans lequel la fonction est de la forme :

$$f(\pi) = m^{\pi} \bmod 2^l$$

dans lequel :

   • $\pi$ est la donnée d'épreuve,
   • $l$ est un entier prédéterminé tel que $2^{l-1}$ est premier,
   • $m$ est un générateur prédéterminé du groupe cyclique à $2^{l-1}$ éléments.

7. Procédé selon l'une des revendications précédentes, dans lequel l'ajustement comprend en outre une troncature (106) de la donnée intermédiaire.

8. Procédé selon la revendication précédente, dans lequel plusieurs paramètres sont simultanément ajustés au cours de l'étape d'ajustement par différentes troncatures (106) de la donnée intermédiaire, et dans lequel la donnée de sortie a une valeur fonction de la valeur de chaque paramètre ajusté.

9. Procédé selon l'une des revendications précédentes, dans lequel le capteur (4) est un capteur biométrique.

10. Produit programme d'ordinateur comprenant des instructions de code de programme pour l'exécution des étapes du procédé selon l'une des revendications précédentes, lorsque ce programme est exécuté par au moins un processeur (12).

11. Terminal (1) comprenant un capteur (4) pour acquérir une image, une interface de saisie (102) pour recevoir une donnée d'épreuve saisie par un utilisateur, et un module de traitement d'image (6) configuré pour :

• ajuster au moins un paramètre à une première valeur lorsque la donnée d'épreuve est égale à une donnée secrète de référence, et à une deuxième valeur différente de la première valeur lorsque la donnée d'épreuve est différente de la donnée secrète de référence, dans lequel l'ajustement comprend l'application (104) d'une fonction pseudo-aléatoire à la donnée d'épreuve de sorte à produire une donnée intermédiaire, dans lequel le paramètre dépend de la donnée intermédiaire,
• générer au moins une donnée de sortie à partir de l'image acquise et à partir du paramètre, la donnée de sortie ayant une valeur fonction de la valeur du paramètre ajusté.

**Patentansprüche**

1. Bildverarbeitungsverfahren, das durch ein Endgerät (1) durchgeführt wird und die folgenden Schritte umfasst:

• Empfang eines vorhergehend von einem Benutzer des Endgeräts (1) erfassten Prüfdatenelements,
• Anpassung (104, 106) von mindestens einem Parameter an einen ersten Wert, wenn das Prüfdatenelement gleich einem geheimen Bezugsdatenelement ist, und an einen zweiten Wert, der sich von dem ersten Wert unterscheidet, wenn das Prüfdatenelement sich von dem geheimen Bezugsdatenelement unterscheidet, wobei die Anpassung die Anwendung (104) einer Pseudozufallsfunktion auf das Prüfdatenelement umfasst, derart, dass ein Zwischendatenelement erzeugt wird, wobei der Parameter von dem Zwischendatenelement abhängig ist,
• Erzeugung (200) eines Ausgangsdatenelements ausgehend von: einem Eingangsdatenelement, das ein vorhergehend von einem Sensor (4) erfasstes Bild ist oder davon abhängig ist, und ferner ausgehend von dem Parameter, wobei das Ausgangsdatenelement einen Wert aufweist, der vom Wert des angepassten Parameters abhängt.

2. Verfahren nach dem vorhergehenden Anspruch, wobei die Werte des Parameters angepasst werden, damit das Ausgangsdatenelement, wenn der Parameter an den zweiten Wert angepasst wird, in Bezug auf wenn der Parameter an den ersten Wert angepasst wird, herabgesetzt wird.

3. Verfahren nach einem der vorhergehenden Ansprüche, wobei der zweite Wert des Parameters dem empfangenen Prüfdatenelement eigen ist.

4. Verfahren nach einem der vorhergehenden Ansprüche, wobei das Ausgangsdatenelement ein biometrisches Prüfdatenelement ist, das dazu bestimmt ist, mit einem geheimen biometrischen Bezugsdatenelement verglichen zu werden.

5. Verfahren nach einem der vorhergehenden Ansprüche, wobei die Pseudozufallsfunktion eine zyklische Permutation ist.

6. Verfahren nach einem der vorhergehenden Ansprüche, wobei die Funktion die folgende Form aufweist:

$$f(\pi) = m^\pi \bmod 2^l$$

wobei:

• $\pi$ das Prüfdatenelement ist,
• $l$ eine vorbestimmte Ganzzahl ist, derart, dass $2^{l-1}$ Erste ist;
• m ein vorbestimmter Generator der zyklischen Gruppe mit $2^{l-1}$ Elementen ist.

7. Verfahren nach einem der vorhergehenden Ansprüche, wobei die Anpassung ferner einen Abbruch (106) des Zwischendatenelements umfasst.

8. Verfahren nach dem vorhergehenden Anspruch, wobei während des Schritts der Anpassung durch verschiedene Abbrüche (106) des Zwischendatenelements mehrere Parameter gleichzeitig angepasst werden und wobei das Ausgangsdatenelement einen Wert aufweist, der von dem Wert von jedem angepassten Parameter abhängt.

9. Verfahren nach einem der vorhergehenden Ansprüche, wobei der Sensor (4) ein biometrischer Sensor ist.

10. Computerprogrammprodukt, das Programmcodeanweisungen für die Ausführung der Schritte des Verfahrens nach einem der vorhergehenden Ansprüche umfasst, wenn dieses Programm durch mindestens einen Prozessor (12) ausgeführt wird.

11. Endgerät (1), das einen Sensor (4) zum Erfassen eines Bildes, eine Eingabeschnittstelle (102) zum Empfangen eines von einem Benutzer erfassten Prüfdatenelements, und ein Bildverarbeitungsmodul (6) umfasst, das ausgestaltet ist zum:

• Anpassen von mindestens einem Parameter an einen ersten Wert, wenn das Prüfdatenelement gleich einem geheimen Bezugsdatenelement ist, und an einen zweiten Wert, der sich von dem ersten Wert unterscheidet, wenn das Prüfdatenelement sich von dem geheimen Bezugswert unterscheidet, wobei die Anpassung die Anwendung (104) einer Pseudozufallsfunktion auf das Prüfdatenelement umfasst, derart dass ein Zwischendatenelement erzeugt wird, wobei der Parameter von dem Zwischendatenelement abhängig ist,
• Erzeugen von mindestens einem Ausgangsdatenelement ausgehend von dem erfassten Bild und ausgehend von dem Parameter, wobei das Ausgangsdatenelement einen Wert aufweist, der von dem Wert des angepassten Parameters abhängt.

## Claims

1. An image processing method implemented by a terminal (1), comprising steps of:

• receiving a test data previously entered by a user of the terminal (1),
• adjusting (104, 106) at least one parameter to a first value when the test data is equal to a secret reference data, and to a second value different from the first value when the test data is different from the secret reference data, wherein the adjustment comprises the application (104) of a pseudo-random function to the test data so as to produce an intermediate data, wherein the parameter depends on the intermediate data,
• generating (200) an output data from: an input data being or depending on an image previously acquired by a sensor (4), and furthermore from the parameter, the output data having a value based on the value of the adjusted parameter.

2. The method according to the preceding claim, wherein the values of the parameter are adapted so that the output data is degraded when the parameter is adjusted to the second value compared to when the parameter is adjusted to the first value.

3. The method according to any of the preceding claims, wherein the second value of the parameter is specific to the received test data.

4. The method according to any of the preceding claims, wherein the output data is a biometric test data intended to be compared with a secret reference biometric data.

5. The method according to any of the preceding claims, wherein the pseudo-random function is a circular permutation.

6. The method according to any of the preceding claims, wherein the function is in the form:

$$f(\pi) \ = \ m^{\pi} \, mod \ 2^{l}$$

where

• $\pi$ is the test data,
• $l$ is a predetermined integer such that $2^{l-1}$ is prime,
• $m$ is a predetermined generator of the cyclic group with $2^{l-1}$ elements.

7. The method according to any of the preceding claims, wherein the adjustment further comprises a truncation (106) of the intermediate data.

8. The method according to the preceding claim, wherein several parameters are simultaneously adjusted during the adjustment step by different truncations (106) of the intermediate data, and wherein the output data has a value based on the value of each adjusted parameter.

9. The method according to any of the preceding claims, wherein the sensor (4) is a biometric sensor.

10. A computer program product comprising program code instructions for the execution of the steps of the method according to any of the preceding claims, when this program is executed by at least one processor (12).

11. A terminal (1) comprising a sensor (4) for acquiring an image, an input interface (102) for receiving a test data entered by a user, and an image processing module (6) configured to:

• adjust at least one parameter to a first value when the test data is equal to a secret reference data, and to a second value different from the first value when the test data is different from the secret reference data, wherein the adjustment comprises the application (104) of a pseudo-random function to the test data so as to produce an intermediate data, wherein the parameter depends on the intermediate data,
• generate at least one output data from the acquired image and from the parameter, the output data having a value based on the value of the adjusted parameter.

**FIG. 1**

Saisie d'une donnée d'épreuve — 102

Application d'une fonction de hachage cryptographique — 104

Troncatures — 106

Acquisition de donnée biométrique — 100

Prétraitement de la donnée biométrique — 202

Codage — 204

Comparaison avec donnée biométrique de référence — 206

200

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015097413 A1

- US 2004164848 A

**Littérature non-brevet citée dans la description**

- **KEYURKUMAR PATEL ; ANIL K. JAIN.** *Secure Face Unlock: Spoof Détection on Smartphones,* 2016